(19) Europäisches Patentamt
European Patent Office
Office européen des brevets

(11) **EP 3 919 938 A1**

(12) **EUROPEAN PATENT APPLICATION**
published in accordance with Art. 153(4) EPC

(43) Date of publication:
**08.12.2021 Bulletin 2021/49**

(51) Int Cl.:
**G01S 19/07** (2010.01)

(21) Application number: **19918475.5**

(22) Date of filing: **05.03.2019**

(86) International application number:
**PCT/JP2019/008658**

(87) International publication number:
**WO 2020/178984 (10.09.2020 Gazette 2020/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **AMISHIMA, Takeshi**
**Tokyo 100-8310 (JP)**
• **SUZUKI, Nobuhiro**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **INFORMATION PROCESSING DEVICE AND POSITIONING AUGMENTATION INFORMATION TRANSMISSION METHOD**

(57)    The interval ($D_h$) between grid points to which transmitting positioning augmentation information (a) is transmitted from a quasi-zenith satellite (1) is set according to a fluctuation of an index value of an ionospheric state for each of a plurality of areas divided on the ground.

FIG. 2

**Description**

TECHNICAL FIELD

The present invention relates to an information processing device that generates positioning augmentation information used for correcting a positioning error of a ground station terminal and a positioning augmentation information transmission method.

BACKGROUND ART

There is a system in which a ground station terminal corrects the positioning error of GNSS (Global Navigation Satellite System) using positioning augmentation information delivered from a quasi-zenith satellite. This system can achieve centimeter-class positioning accuracy and is called CLAS. In CLAS, many electronic reference points are installed on the ground. Further, the ground is divided into a plurality of areas, and a virtual grid in which grid points are arranged at equal intervals is set.

Further, one of factors of the positioning error is the delay of the positioning signal in an ionospheric layer. If the propagation of the positioning signal is delayed in the ionospheric layer, a measurement error of the pseudo distance from the GNSS satellite to the ground station terminal occurs, and the positioning accuracy deteriorates. The positioning augmentation information includes a correction value for delay of the positioning signal in the ionospheric layer. Hereinafter, this correction value will be referred to as an ionospheric correction value. The ionospheric correction value is calculated for each grid point using the measurement results of the pseudo distances obtained from each of the plurality of electronic reference points.

The quasi-zenith satellite sequentially delivers, for each area set on the ground, positioning augmentation signals including the corresponding ionospheric correction values for each of the plurality of grid points set in the area. In CLAS, there is a limit to the transmission capacity of the positioning augmentation signal, which is about 2 kbps (bits per second). As a result, it is necessary to reduce (for example, compress) the amount of positioning augmentation information in order to thoroughly deliver the positioning augmentation signal to the entire range of a service target.

For example, Patent Literature 1 describes a positioning system that reduces the amount of positioning augmentation information and then delivers it to a ground station terminal. This system reduces the amount of positioning augmentation information in methods (1) and (2). The method (1) reduces the number of positioning augmentation signals to be delivered by widening the grid interval within the service target range. The method (2) reduces the amount of information by approximating the ionospheric correction value with a function and delivering only the coefficient of the approximated function as a positioning augmentation signal.

CITATION LIST

PATENT LITERATURE

Patent Literature 1: International Publication No. 2016/088654

SUMMARY OF INVENTION

TECHNICAL PROBLEM

However, when the grid interval is widened, the amount of information to be delivered is reduced, but the positioning accuracy deteriorates by that amount. Further, even when the ionospheric correction value is approximated with a function, the positioning accuracy deteriorates due to the approximation error. As described above, in the positioning system described in Patent Literature 1, there is a problem that the positioning accuracy deteriorates when the amount of positioning augmentation information is reduced.

Further, the positioning system described in Patent Literature 1 does not consider the deterioration of positioning accuracy due to the ionospheric disturbance. Thus, there is a problem that the positioning accuracy deteriorates when the ionospheric disturbance occurs and the delay amount of the positioning signal changes.

The present invention solves the above problems and has an object to obtain an information processing device and a positioning augmentation information transmission method capable of reducing the amount of positioning augmentation information while maintaining positioning accuracy even when ionospheric disturbance occurs.

SOLUTION TO PROBLEM

The information processing device according to the present invention is used in a positioning system that includes a first satellite for transmitting positioning augmentation information, a second satellite for transmitting positioning information, and a terminal for performing positioning using the positioning information, the first satellite transmitting the positioning augmentation information corresponding to each of grid points set on the ground, and the terminal correcting the positioning information using the positioning augmentation information to perform positioning. The information processing device includes a calculation unit for calculating positioning correction information corresponding to each grid point, a setting unit for setting an interval between the grid points to which transmitting the positioning augmentation information including the positioning correction information calculated by the calculation unit is transmitted from the first satellite, in accordance with a fluctuation of an index value of an ionospheric state for each of a plurality of areas divided on the ground, and a transmission unit for performing a process of transmitting the positioning augmentation information including the positioning correction information corresponding to each of the grid points having the interval set by the setting unit to the first satellite.

ADVANTAGEOUS EFFECTS OF INVENTION

According to the present invention, the interval between grid points to which positioning augmentation information is transmitted from the first satellite is set according to the fluctuation of the index value of the ionospheric state for each of a plurality of areas divided on the ground. As a result, even when ionospheric disturbance occurs, it is possible to reduce the amount of positioning augmentation information while maintaining positioning accuracy.

BRIEF DESCRIPTION OF DRAWINGS

FIG. 1 is a diagram showing an outline of a positioning system according to a first embodiment.
FIG. 2 is a block diagram showing a configuration of an information processing device according to the first embodiment.
FIG. 3 is a diagram showing a grid for each area set on the ground.
FIG. 4 is a flowchart showing a positioning augmentation information transmission method according to the first embodiment.
FIG. 5 is a diagram illustrating a grid interval setting process for an area strongly affected by ionospheric disturbance.
FIG. 6 is a diagram showing an outline of a grid interval setting process according to a fluctuation of an ionospheric correction value in the first embodiment.
FIG. 7A is a block diagram showing a hardware configuration for implementing functions of the information processing device according to the first embodiment. FIG. 7B is a block diagram showing a hardware configuration for executing software that implements functions of the information processing device according to the first embodiment.
FIG. 8 is a block diagram showing a configuration of an information processing device according to a second embodiment.
FIG. 9 is a diagram showing an outline of a grid interval setting process according to a fluctuation of an ionospheric correction value error in the second embodiment.
FIG. 10 is a block diagram showing a configuration of an information processing device according to a third embodiment.
FIG. 11 is a diagram showing an outline of a grid interval setting process according to a fluctuation of an ionospheric correction value in the third embodiment.
FIG. 12 is a block diagram showing a configuration of an information processing device according to a fourth embodiment.
FIG. 13 is a diagram showing an outline of a grid interval setting process according to a fluctuation of an ionospheric correction value error in the fourth embodiment.
FIG. 14 is a block diagram showing a configuration of an information processing device according to a fifth embodiment.
FIG. 15 is a diagram showing an outline of a grid point thinning process according to the fifth embodiment.
FIG. 16 is a block diagram showing a configuration of an information processing device according to a sixth embodiment.
FIG. 17 is a diagram showing an outline of a grid interval setting process according to a fluctuation of an ionospheric correction value error in the sixth embodiment.
FIG. 18 is a block diagram showing a configuration of an information processing device according to a seventh embodiment.
FIG. 19 is a diagram showing areas susceptible to ionospheric disturbances divided for each latitude.

DESCRIPTION OF EMBODIMENTS

First Embodiment.

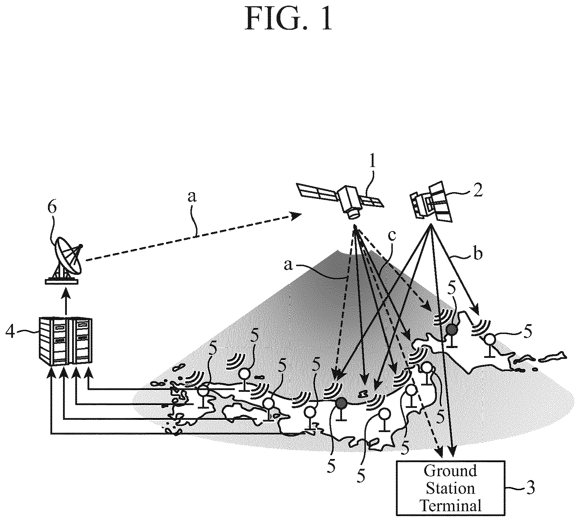

FIG. 1 is a diagram showing an outline of a positioning system according to the first embodiment, and shows CLAS using a quasi-zenith satellite 1. The positioning system shown in FIG. 1 includes, for example, a quasi-zenith satellite 1, a GNSS satellite 2, a ground station terminal 3, a main control station 4, an electronic reference point 5, and an uplink station 6.

The quasi-zenith satellite 1 is a first satellite that transmits positioning augmentation information a to the ground station terminal 3. The positioning augmentation information a is information used for correcting positioning information b, and includes correction values for various errors. For example, the correction values included in the positioning augmentation information a include a correction value for the propagation delay of the positioning information in the ionospheric layer, a correction value for the propagation delay of the positioning information in the troposphere, and an error (integrity information) of these correction values.

The GNSS satellite 2 is a second satellite that transmits positioning information b to the ground station terminal 3. For example, the GNSS satellite 2 is a GPS (Global Positioning Systems) satellite. The positioning information b is information used for positioning of the ground station terminal 3.

The ground station terminal 3 is a terminal that performs positioning using the positioning information b. Further, the ground station terminal 3 corrects the positioning information b by using the positioning augmentation information a to perform positioning. The quasi-zenith satellite 1 transmits positioning complementary information c to the ground station terminal 3 in addition to the positioning augmentation information a. The positioning complementary information c is information that complements the positioning using the positioning information b by the ground station terminal 3.

The main control station 4 is an information processing device according to the first embodiment, and generates positioning augmentation information a. The positioning augmentation information a generated by the main control station 4 is output to the uplink station 6. The uplink station 6 transmits the positioning augmentation information a to the quasi-zenith satellite 1. The quasi-zenith satellite 1 delivers the positioning augmentation information a received from the main control station 4 via the uplink station 6 to the ground station terminal 3 as an L6 signal.

The electronic reference points 5 are installed at a plurality of locations on the ground, receive positioning information b (GNSS signal) from the GNSS satellite 2, estimate the amount of error contained in the positioning information b using known position information of the electronic reference points 5 and the received positioning information b, and transmit the correction information for correcting the estimated amount of error to the main control station 4. For example, in Japan, electronic reference points 5 are installed at about 1300 locations at intervals of about 20 km.

In CLAS, virtual grids are set at equal intervals on the ground. The grid points are virtual electronic reference points arranged at equal intervals, and the correction value of the transmission delay of the positioning information b in the ionospheric layer is calculated for each grid point. Hereinafter, this correction value is referred to as an ionospheric correction value. For example, in Japan, grid points are set at about 350 points at intervals of about 60 km. The quasi-zenith satellite 1 delivers positioning augmentation information a including the ionospheric correction value every 30 seconds.

The ionospheric correction value is the amount of delay in positioning information at the distance from the GNSS satellite 2 to each grid point that occurs in the ionospheric layer. The ground station terminal 3 measures the pseudo distance between the GNSS satellite and the ground station terminal 3 using the positioning information b, corrects the measured pseudo distance using the ionospheric correction value included in the positioning augmentation information a, and thereby can obtain a highly accurate pseudo distance.

By calculating the ionospheric correction value for each grid point, that is, by allocating the ionospheric correction value for each grid point, the positioning augmentation information a including the ionospheric correction value is spatially compressed. Note that, the transmission capacity of the positioning augmentation information a including the ionospheric correction value is specified to be about 2 kbps.

As described above, since the ionospheric correction value is calculated for each grid point, the ground station terminal 3 can accurately correct the positioning information b by using the positioning augmentation information a including an ionospheric correction value corresponding to a grid point set to the location closest to the ground station terminal 3 in the positioning augmentation information a delivered from the quasi-zenith satellite 1. That is, the narrower the grid interval is, the more the ground station terminal 3 can receive the ionospheric correction value corresponding to the grid points set in the vicinity, so that the positioning accuracy is improved.

However, the transmission capacity of the positioning augmentation information a is limited (about 2 kbps), and the grid interval cannot be narrowed. On the other hand, when the grid interval is increased from the initial 60 km interval to an interval that is an integral multiple of two or more of the interval (for example, 120 km interval) in order to reduce the amount of information to be transmitted in the positioning augmentation information a, the positioning accuracy deteriorates from the centimeter class to the digital meter class. In addition, the amount of information to be transmitted is reduced by including only the coefficient when the ionospheric correction value is approximated with the function in the positioning augmentation information a and transmitting it, but the positioning accuracy deteriorates from the centimeter class to the digital meter class due to the approximation error.

Moreover, since the ionospheric disturbance produces a non-uniform ionospheric layer, the delay of the positioning information b in the ionospheric layer strongly affected by the ionospheric disturbance is different from the delay of the positioning information b in the ionospheric layer weakly affected by the ionospheric disturbance. This difference in delay greatly deteriorates the accuracy of the ionospheric correction value, which is the correction value of the pseudo distance.

Thus, in the positioning system according to the first embodiment, the information processing device dynamically sets an interval between grid points to which the positioning augmentation information a is transmitted from the quasi-zenith satellite 1 according to a fluctuation of an index value of an ionospheric state. As a result, the grid interval is set in real time according to a degree of influence of an ionospheric disturbance, so that the ground station terminal 3 can maintain the positioning accuracy even if the ionospheric disturbance occurs. Furthermore, since the grid interval is not fixed to a predetermined value (for example, 60 km) and the grid interval can be widened in an area where the degree of influence of ionospheric disturbance is low, the amount of positioning augmentation information a can be reduced.

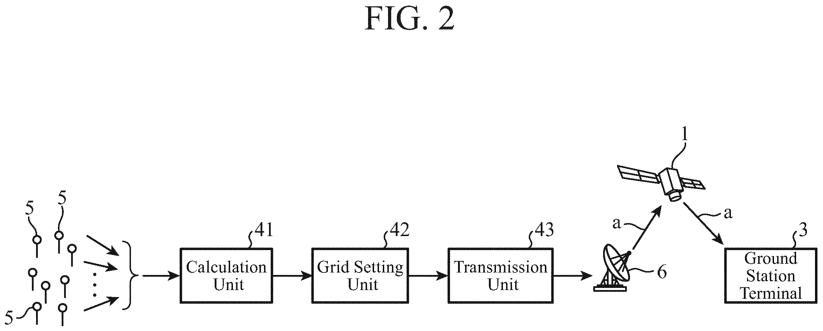

FIG. 2 is a block diagram showing a configuration of the information processing device according to the first embodiment, and shows a device corresponding to the main control station 4 shown in FIG. 1. The information processing device shown in FIG. 2 includes a calculation unit 41, a grid setting unit 42, and a transmission unit 43, and generates positioning augmentation information a corresponding to each of a plurality of grid points on the basis of positioning correction information measured by each of a plurality of electronic reference points 5.

The calculation unit 41 calculates corresponding positioning correction information for each grid point in all areas on the basis of the positioning correction information measured by each of the plurality of electronic reference points 5. For example, the calculation unit 41 in the first embodiment calculates the corresponding ionospheric correction value for each grid point in all areas.

The grid setting unit 42 is a setting unit that sets an interval between grid points to which the positioning augmentation information a including the ionospheric correction value calculated by the calculation unit 41 is transmitted from the quasi-zenith satellite 1 according to the fluctuation of the index value of the ionospheric state for each of a plurality of areas area divided on the ground.

For example, in an area strongly affected by the ionospheric disturbance generated in the ionospheric layer, the spatial variation of the ionospheric correction value for each grid point is large, and in an area not so affected by the ionospheric disturbance, the spatial variation of the ionospheric correction value for each grid point is small.

Thus, the grid setting unit 42 in the first embodiment sets the interval between grid points to which the positioning augmentation information a is transmitted from the quasi-zenith satellite 1 according to the fluctuation of the ionospheric correction value corresponding to each of the plurality of grid points included in the area.

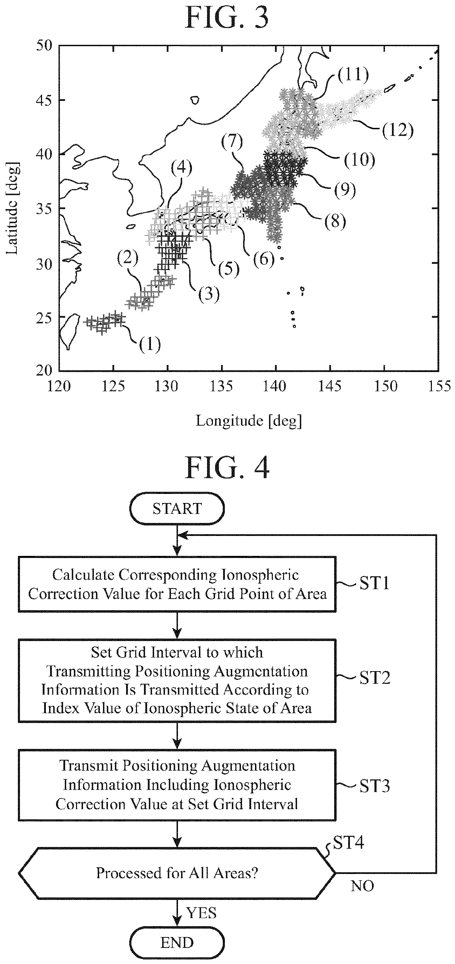

FIG. 3 is a diagram showing a grid for each area set on the ground. For example, Japan is divided into areas (1) to (12), and a grid is set for each area. The interval between grid points is dynamically set by the grid setting unit 42. "Dynamically" means that the interval between grid points is set every time the positioning augmentation information a is delivered according to the index value of the ionospheric state for each area, or the interval between grid points is set sequentially in a constant cycle, such as every hour or every day.

Further, the grid setting unit 42 sets the grid interval so that the total number of grid points corresponding to each piece of the positioning augmentation information a delivered from the quasi-zenith satellite 1 is equal to or less than the specified value. The specified value is the total number of grid points that satisfy the limit of the transmission capacity of the positioning augmentation information a.

The transmission unit 43 performs a process of transmitting the positioning augmentation information a including the ionospheric correction value corresponding to each of the grid points at an interval set by the grid setting unit 42 to the quasi-zenith satellite 1.

For example, the transmission unit 43 transmits the positioning augmentation information a to the quasi-zenith satellite 1 via the uplink station 6. The quasi-zenith satellite 1 delivers the positioning augmentation information a received from the main control station 4 to the ground station terminal 3.

Next, the operation of the information processing device according to the first embodiment will be described.

FIG. 4 is a flowchart showing a positioning augmentation information transmission method according to the first embodiment, and shows the operation of the information processing device which is the main control station 4.

The calculation unit 41 calculates the corresponding ionospheric correction value for each grid point in the area on the basis of the positioning correction information measured by each of the plurality of electronic reference points 5 (step ST1). The ionospheric correction value for each grid point calculated by the calculation unit 41 is output to the grid setting unit 42.

The grid setting unit 42 sets the interval between grid points to which the positioning augmentation information a including the ionospheric correction value calculated by the calculation unit 41 is transmitted from the quasi-zenith satellite 1 according to a spatial fluctuation of the ionospheric correction value for each area (step ST2).

For example, the grid setting unit 42 receives an ionospheric correction value $I_{Gi}$ for each grid point expressed by the following equation (1) from the calculation unit 41. In the following equation (1), $x_{Gi}$ and $y_{Gi}$ are the latitude and longitude of the i-th grid point, and $I_{Gi}$ is the ionospheric correction value corresponding to the i-th grid point. N is a natural number greater than or equal to 1.

$$I_{Gi} = ISSR(x_{Gi}, y_{Gi}), i = 1, ..., N \qquad \cdot \cdot \cdot \quad (1)$$

Next, the grid setting unit 42 calculates the spatial variation of the ionospheric correction value $I_{Gi}$ for each area on the basis of the following equation (2). In the following equation (2), $i \in h$ means a set of indexes i of the electronic reference point 5 included in the h-th area, and var means to calculate the variance. The grid setting unit 42 calculates the spatial variation of the ionospheric correction value $I_{Gi}$ sequentially input from the calculation unit 41 using the following equation (2). $\Omega_h$ can be a measure of the stability of the ionospheric layer.

$$\Omega_h = \mathrm{var}(I_{Gi}), i \in h \qquad \cdot \cdot \cdot \quad (2)$$

The specified value TH of the total number of grid points to which the positioning augmentation information a is transmitted can be expressed by the following equation (3), where $M_h$ is the number of grid points in each area. In the following equation (3), H is the total number of areas set on the ground. Further, the number of grid points $M_h$ can be expressed by the following equation (4), where $A_h$ is the area of the area and $D_h$ is the grid interval.

$$\sum_{h=1}^{H} M_h < TH \qquad \cdot \cdot \cdot \quad (3)$$

$$M_h = \frac{A_h}{D_h} \qquad \cdot \cdot \cdot \quad (4)$$

The grid setting unit 42 sets the number of grid points $M_h$ according to the following equation (5) so that the larger the spatial variation $\Omega_h$ of the ionospheric correction value $I_{Gi}$, the larger the number, and the smaller the spatial variation $\Omega_h$, the smaller the number. That is, the grid setting unit 42 sets the grid interval $D_h$ for each area according to the following equation (6). $\Omega_j$ is a spatial variation of the ionospheric correction value $I_{Gi}$ in the j-th area.

$$M_h = TH \frac{\Omega_h}{\sum_{j=1}^{H} \Omega_j} \qquad \cdot \cdot \cdot \quad (5)$$

$$D_h = \frac{A_h}{M_h} = \frac{A_h}{TH \left( \dfrac{\Omega_h}{\sum_{j=1}^{H} \Omega_j} \right)} = \frac{A_h \left( \sum_{j=1}^{H} \Omega_j \right)}{TH \Omega_h} \qquad \cdot \cdot \cdot \quad (6)$$

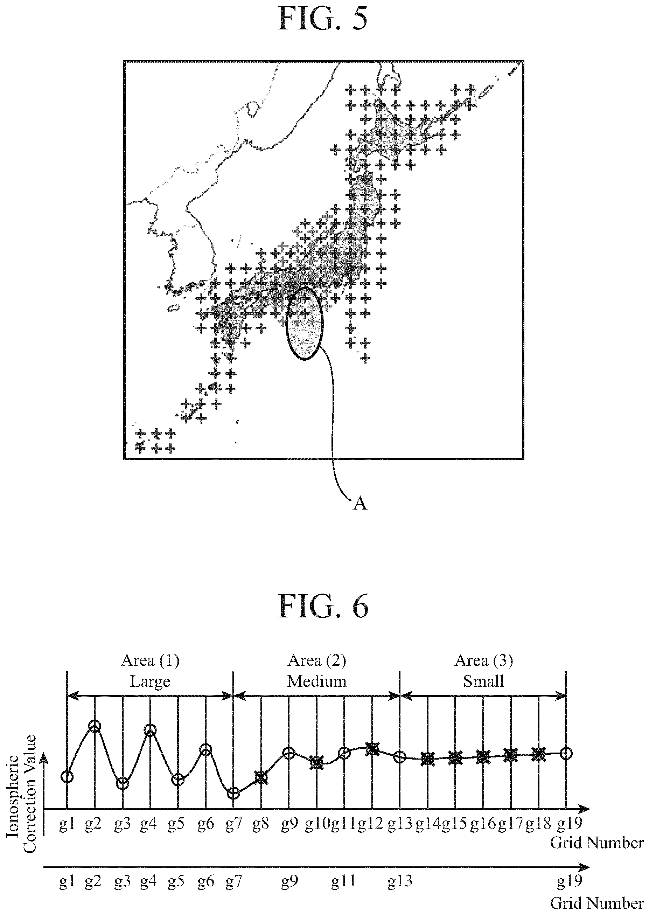

FIG. 5 is a diagram illustrating a grid interval setting process for an area strongly affected by ionospheric disturbance. A region A shown in FIG. 5 is a region strongly affected by ionospheric disturbance.

The grid setting unit 42 sets the grid interval $D_h$ in accordance with the above equation (6) for the region A strongly affected by the ionospheric disturbance. The region A is strongly affected by the ionospheric disturbance, and the spatial variation $\Omega_h$ of the ionospheric correction value calculated by the calculation unit 41 is large, and thus, the grid setting unit 42 narrows the grid interval $D_h$ at which the positioning augmentation information a is transmitted in the area including the region A.

FIG. 6 is a diagram showing an outline of a grid interval setting process according to the fluctuation of the ionospheric correction value in the first embodiment. In FIG. 6, in order to simplify the explanation of the relationship between the area and the grid points, the grid points are not defined in two dimensions of latitude and longitude, but in one dimension for each grid number. In the area (1), the spatial variation of the ionospheric correction value is large, in the area (3), the spatial variation of the ionospheric correction value is small, and in the area (2), the spatial variation of the ionospheric correction value is about medium between the area (1) and the area (3).

The grid setting unit 42 does not thin out the grid point so that the grid interval $D_h$ at which the positioning augmentation information a should be transmitted becomes narrow in the area (1) where the spatial variation of the ionospheric correction value is large. The positioning augmentation information a is delivered at this grid interval, and thereby the ground station terminal 3 can receive the positioning augmentation information a including the ionospheric correction value corresponding to the grid point closer to the ground station terminal 3. In this way, the grid setting unit 42 sets the number of thinned-out grid points to 0 or reduced number in the area where the spatial fluctuation of the ionospheric correction value calculated by the calculation unit 41 is large.

In the area (2) where the spatial variation of the ionospheric correction value is medium, the grid setting unit 42 thins out the grid points so that the grid interval $D_h$ at which the positioning augmentation information a is transmitted is medium. For example, the area (2) has grid points having grid numbers from g8 to g13, but the grid setting unit 42 thins out three grid points having grid numbers g8, g10, and g12. In the area (2), the spatial variation of the ionospheric correction value is medium, so that the ground station terminal 3 can achieve the positioning accuracy of the centimeter class by using the positioning augmentation information a including the ionospheric correction value corresponding to the grid point closest to the ground station terminal 3 among the three grid points having grid numbers g9, g11, and g13.

In the area (3) where the spatial variation of the ionospheric correction value is small, the grid setting unit 42 thins out the grid points so that the grid interval $D_h$ at which the positioning augmentation information a is transmitted is widened. For example, the area (3) has grid points having grid numbers from g14 to g19, but the grid setting unit 42 thins out five grid points having grid numbers from g14 to g18. Since the spatial variation of the ionospheric correction value is small in the area (3), the ground station terminal 3 can achieve the positioning accuracy of the centimeter class by using the positioning augmentation information a including the ionospheric correction value corresponding to the grid point of the grid number g19. In this way, the grid setting unit 42 increases the number of thinned-out grid points in the area where the spatial fluctuation of the ionospheric correction value is small.

Return to the description of FIG. 4.

The transmission unit 43 performs a process of transmitting the positioning augmentation information a of the grid interval set by the grid setting unit 42 to the quasi-zenith satellite 1 (step ST3). For example, the transmission unit 43 transmits the positioning augmentation information a including the ionospheric correction value calculated by the calculation unit 41 to the quasi-zenith satellite 1 via the uplink station 6. The quasi-zenith satellite 1 delivers the positioning augmentation information a received from the main control station 4 to the ground station terminal 3. The ground station terminal 3 receives the positioning augmentation information a including the ionospheric correction value corresponding to the grid point closest to the ground station terminal 3 in the positioning augmentation information a delivered from the quasi-zenith satellite 1, and corrects the positioning information b by using the ionospheric correction value included in the received positioning augmentation information a. As a result, in the ground station terminal 3, centimeter-class positioning accuracy is achieved.

After that, the calculation unit 41 confirms whether or not the ionospheric correction value for each grid point has been calculated in all areas (step ST4). If there is an area for which the ionospheric correction value for each grid point has not been calculated (step ST4; NO), the calculation unit 41 returns to the process of step ST1 and calculates the ionospheric correction value for each grid point in the next area. When the ionospheric correction value for each grid point has been calculated in all areas (step ST4; YES), the information processing device according to the first embodiment ends a series of processing shown in FIG. 4.

Subsequently, a hardware configuration for implementing the functions of the information processing device according to the first embodiment will be described. The functions of the calculation unit 41, the grid setting unit 42, and the transmission unit 43 in the information processing device according to the first embodiment are implemented by a processing circuit. That is, the information processing device according to the first embodiment includes a processing circuit for executing the processing from step ST1 to step ST4 in FIG. 4. The processing circuit may be dedicated hardware or a central processing unit (CPU) that executes a program stored in a memory.

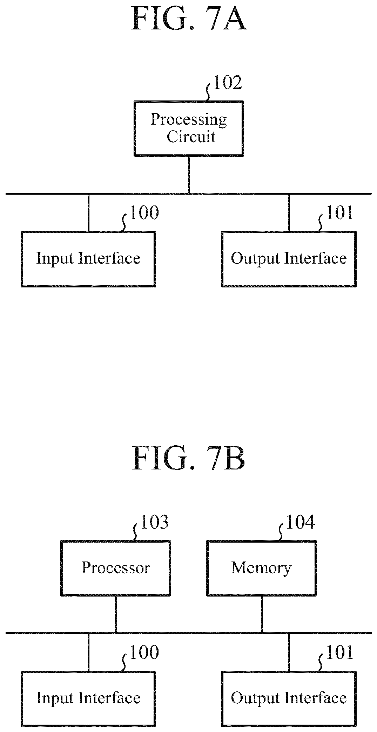

FIG. 7A is a block diagram showing a hardware configuration for implementing functions of the information processing device according to the first embodiment. FIG. 7B is a block diagram showing a hardware configuration for executing software that implements functions of the information processing device according to the first embodiment. In FIGS. 7A and 7B, an input interface 100 is an interface for relaying information input by the calculation unit 41 from the electronic reference point 5. An output interface 101 is an interface for relaying information output from the transmission unit 43 to the uplink station 6.

When the processing circuit is dedicated hardware shown in FIG. 7A, a processing circuit 102 corresponds, for example, to a single circuit, a composite circuit, a programmed processor, a parallel-programmed processor, an application specific integrated circuit (ASIC), a field-programmable gate array (FPGA), or a combination thereof. Note that, the functions of the calculation unit 41, the grid setting unit 42, and the transmission unit 43 may be implemented by separate processing circuits, or these functions may be collectively implemented by one processing circuit.

When the processing circuit is a processor 103 shown in FIG. 7B, the functions of the calculation unit 41, the grid setting unit 42, and the transmission unit 43 are implemented by software, firmware, or a combination of software and firmware. Software or firmware is written as a program and stored in a memory 104. The processor 103 implements the functions of the calculation unit 41, the grid setting unit 42, and the transmission unit 43 by reading and executing the program stored in the memory 104. That is, the information processing device according to the first embodiment includes the memory 104 for storing programs in which the processing from step ST1 to step ST4 shown in FIG. 4 is executed as a result when executed by the processor 103. These programs cause a computer to execute the procedures or methods performed in the calculation unit 41, the grid setting unit 42, and the transmission unit 43. The memory 104 may be a computer-readable storage medium that stores programs for causing the computer to function as the calculation unit 41, the grid setting unit 42, and the transmission unit 43.

Examples of the memory 104 correspond to a nonvolatile or volatile semiconductor memory, such as a random access memory (RAM), a read only memory (ROM), a flash memory, an erasable programmable read only memory (EPROM), or an electrically-EPROM (EEPROM), a magnetic disk, a flexible disk, an optical disk, a compact disk, a mini disk, and a DVD.

Note that, part of the functions of the calculation unit 41, the grid setting unit 42, and the transmission unit 43 may be implemented by dedicated hardware, and part of the functions may be implemented by software or firmware.

For example, for the transmission unit 43, the function may be implemented by a processing circuit as dedicated hardware, and for the calculation unit 41 and the grid setting unit 42, the functions may be implemented by the processor 103 reading and executing the programs stored in the memory 104. Thus, the processing circuit can implement each of the above functions by hardware, software, firmware, or a combination thereof.

As described above, the information processing device according to the first embodiment sets the grid interval $D_h$ at which the positioning augmentation information a is transmitted from the quasi-zenith satellite 1 according to the index value (spatial variation of the ionospheric correction value) of the ionospheric state for each area that divides the ground into a plurality of areas. As a result, even if ionospheric disturbance occurs, the amount of positioning augmentation information can be reduced while maintaining positioning accuracy. Further, by executing the positioning augmentation information transmission method shown in FIG. 4, the same effect as described above can be obtained.

Second Embodiment.

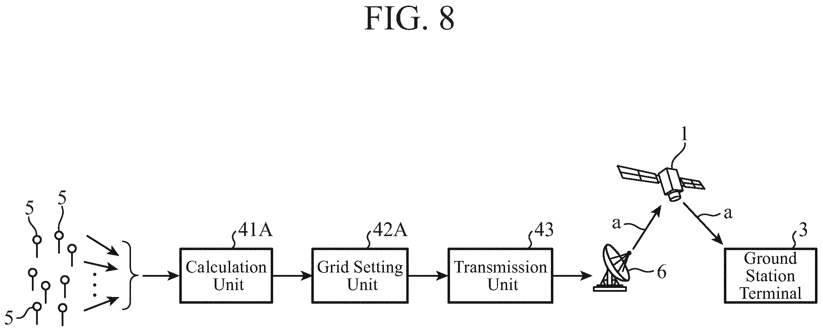

FIG. 8 is a block diagram showing the configuration of an information processing device according to the second embodiment, and is a device corresponding to the main control station 4 shown in FIG. 1. The information processing device shown in FIG. 8 includes a calculation unit 41A, a grid setting unit 42A, and a transmission unit 43, and generates the positioning augmentation information a corresponding to each of the plurality of grid points on the basis of the positioning correction information measured by each of the plurality of electronic reference points 5.

In the area strongly affected by the ionospheric disturbance, the ionospheric correction value error $\sigma$ for each grid point is large, and in the area not so affected by the ionospheric disturbance, the ionospheric correction value error $\sigma$ for each grid point is small. That is, the ionospheric correction value error $\sigma$ (integrity information) can be an index value of the ionized state.

The calculation unit 41A calculates the corresponding positioning correction information for each grid point in all areas on the basis of the positioning correction information measured by each of the plurality of electronic reference points 5. For example, the calculation unit 41A in the second embodiment calculates the ionospheric correction value error $\sigma$ (integrity information) corresponding to each grid point in all areas.

The grid setting unit 42A is a setting unit that sets the interval between grid points to which the positioning augmentation information a including the ionospheric correction value error $\sigma$ calculated by the calculation unit 41A is transmitted from the quasi-zenith satellite 1 according to the fluctuation of the index value of the ionospheric state for each of a plurality of areas divided on the ground.

For example, in the area strongly affected by the ionospheric disturbance generated in the ionospheric layer, the spatial variation of the ionospheric correction value error $\sigma$ for each grid point is large, and in the area not so affected by the ionospheric disturbance, the spatial variation of the ionospheric correction value error $\sigma$ for each grid point is small.

Thus, the grid setting unit 42A in the second embodiment sets the interval between grid points to which the positioning augmentation information a is transmitted from the quasi-zenith satellite 1 according to the fluctuation of the ionospheric correction value error σ corresponding to each of the plurality of grid points included in the area.

Further, the grid setting unit 42A sets the grid interval so that the total number of grid points corresponding to each piece of the positioning augmentation information a delivered from the quasi-zenith satellite 1 is equal to or less than the specified value. The specified value is the total number of grid points that satisfy the limit of the transmission capacity of the positioning augmentation information a.

The transmission unit 43 performs a process of transmitting the positioning augmentation information a including the ionospheric correction value error σ corresponding to each of the grid points at the interval set by the grid setting unit 42A to the quasi-zenith satellite 1. For example, the transmission unit 43 transmits the positioning augmentation information a to the quasi-zenith satellite 1 via the uplink station 6. The quasi-zenith satellite 1 delivers the positioning augmentation information a received from the main control station 4 to the ground station terminal 3.

Next, the operation of the grid setting unit 42A will be described.

For example, the grid setting unit 42A receives the ionospheric correction value error $\sigma_{Gi}$ for each grid point expressed by the following equation (7) from the calculation unit 41A. In the following equation (7), $x_{Gi}$ and $y_{Gi}$ are the latitude and longitude of the i-th grid point, and $\sigma_{Gi}$ is the ionospheric correction value corresponding to the i-th grid point. N is a natural number greater than or equal to 1.

$$\sigma_{Gi} = ISSR\sigma(x_{Gi}, y_{Gi}), i = 1, ..., N \qquad \cdot\cdot\cdot \ (7)$$

Next, the grid setting unit 42A calculates the ionospheric correction value error $\sigma_{Gi}$ on the basis of the following equation (8). In the following equation (8), $i \in h$ means the set of indexes i of the electronic reference point 5 included in the h-th area, and mean means to take the mean. The grid setting unit 42A calculates the spatial mean value $\xi_h$ of the ionospheric correction value error $\sigma_{Gi}$ according to the following equation (8) using the ionospheric correction value error $\sigma_{Gi}$ calculated by the calculation unit 41A. $\xi_h$ can be a measure of the stability of the ionospheric layer.

$$\xi_h = mean(\sigma_{Gi}^2), i \in h \qquad \cdot\cdot\cdot \ (8)$$

Similar to the first embodiment, the specified value TH of the total number of grid points to which the positioning augmentation information a is transmitted can be expressed by the above equation (3) when the number of grid points in each area is $M_h$. Further, the number of grid points $M_h$ can be expressed by the above equation (4), where $A_h$ is the area of the area and $D_h$ is the grid interval.

The grid setting unit 42A sets the number of grid points $M_h$ in accordance with the following equation (9) so that the larger $(\xi_h)^{-1}$, the larger the number, and the smaller $(\xi_h)^{-1}$, the smaller the number. That is, the grid setting unit 42A sets the grid interval $D_h$ for each area from the following equation (10). $(\xi_j)^{-1}$ is the reciprocal of the spatial mean value of the ionospheric correction value error $\sigma_{Gi}$ in the j-th area.

$$M_h = TH \frac{\xi_h^{-1}}{\sum_{j=1}^{H} \xi_j^{-1}} \qquad \cdot\cdot\cdot \ (9)$$

$$D_h = \frac{A_h}{M_h} = \frac{A_h}{TH \dfrac{\xi_h^{-1}}{\sum_{j=1}^{H} \xi_j^{-1}}} = \frac{A_h \left( \sum_{j=1}^{H} \xi_j^{-1} \right)}{TH \xi_h^{-1}} = \frac{A_h \left( \sum_{j=1}^{H} \xi_j^{-1} \right)}{TH \xi_h^{-1}} \qquad \cdot\cdot\cdot \ (10)$$

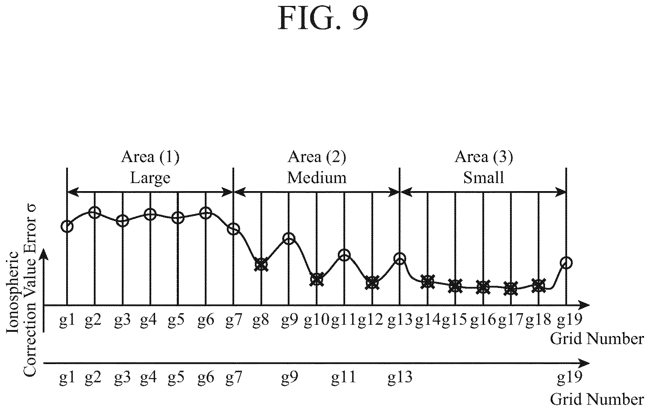

FIG. 9 is a diagram showing an outline of a grid interval setting process according to the fluctuation of the ionospheric correction value error σ in the second embodiment. In FIG. 9, in order to simplify the explanation of the relationship between the area and the grid points, the grid points are not defined in two dimensions of latitude and longitude, but in one dimension for each grid number. In the area (1), the spatial mean value of the ionospheric correction value error σ is large, in the area (3), the spatial mean value of the ionospheric correction value error σ is small, and in the area (2), the spatial variation of the ionospheric correction value error σ is about medium between the area (1) and the area (3).

The grid setting unit 42A does not thin out the grid point so that the grid interval $D_h$ at which the positioning augmentation information a should be transmitted becomes narrow in the area (1) where the spatial mean value of the ionospheric correction value error σ is large. The positioning augmentation information a is delivered at this grid interval, and thereby the ground station terminal 3 can receive the positioning augmentation information a including the ionospheric correction value error σ corresponding to the grid point close to the ground station terminal 3. In this way, the grid setting unit 42A sets the number of thinned-out grid points to 0 or reduced number in the area where the spatial mean value of the ionospheric correction value error σ calculated by the calculation unit 41A is large.

In the area (2) where the spatial mean value of the ionospheric correction value error σ is medium, the grid setting unit 42A thins out the grid points so that the grid interval $D_h$ at which the positioning augmentation information a is transmitted is medium. For example, in the area (2), there are grid points having grid numbers from g8 to g13, but the grid setting unit 42A thins out three grid points having grid numbers g8, g10, and g12. In the area (2), since the spatial mean value of the ionospheric correction value error σ is medium, the ground station terminal 3 can achieve the positioning accuracy of the centimeter class by using the positioning augmentation information a including the ionospheric correction value error σ corresponding to the grid point closest to the ground station terminal 3 among the three grid points having grid numbers g9, g11, and g13.

In the area (3) where the spatial mean value of the ionospheric correction value error σ is small, the grid setting unit 42 thins out the grid points so that the grid interval $D_h$ at which the positioning augmentation information a is transmitted is widened. That is, the grid setting unit 42A increases the number of thinned-out grid points in the area where the spatial mean value of the ionospheric correction value error σ calculated by the calculation unit 41A is small.

For example, in the area (3), there are grid points having grid numbers from g14 to g19, but the grid setting unit 42A thins out five grid points having grid numbers from g14 to g18. In the area (3), since the spatial mean value of the ionospheric correction value error σ is small, the ground station terminal 3 can achieve the positioning accuracy of the centimeter-class just by using the positioning augmentation information a including the ionospheric correction value error σ corresponding to the grid point having the grid number g19.

Note that, the functions of the calculation unit 41A, the grid setting unit 42A, and the transmission unit 43 in the information processing device according to the second embodiment are implemented by a processing circuit. The processing circuit may be the processing circuit 102 of the dedicated hardware shown in FIG. 7A or the processor 103 that executes programs stored in the memory 104 shown in FIG. 7B.

As described above, the information processing device according to the second embodiment sets the grid interval $D_h$ at which the positioning augmentation information a is transmitted from the quasi-zenith satellite 1 on the basis of the index value (the spatial mean value of the ionospheric correction value error σ) of the ionospheric state for each of a plurality of areas divided on the ground. As a result, even if ionospheric disturbance occurs, the amount of positioning augmentation information can be reduced while maintaining positioning accuracy.

In addition, the same effect as described above can be obtained by executing the positioning augmentation information transmission method in the procedure described above.

Third Embodiment.

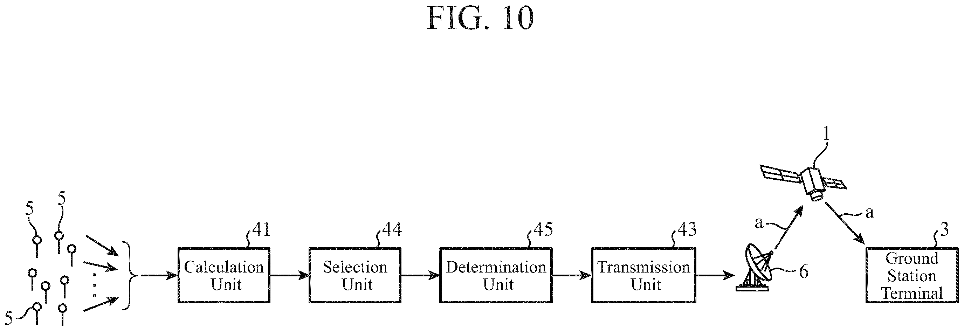

FIG. 10 is a block diagram showing a configuration of an information processing device according to a third embodiment, and is a device corresponding to the main control station 4 shown in FIG. 1. The information processing device shown in FIG. 10 includes a calculation unit 41, a transmission unit 43, a selection unit 44, and a determination unit 45, and generates positioning augmentation information a corresponding to each of a plurality of grid points on the basis of the positioning correction information measured by each of the plurality of electronic reference points 5.

The calculation unit 41 calculates the positioning correction information corresponding to each of all the grid points included in each area on the basis of the correction information measured by each of the plurality of electronic reference points 5. For example, the calculation unit 41, as in the first embodiment, calculates the ionospheric correction value corresponding to each of all the grid points included in each area.

The selection unit 44 selects an order of an approximation function that approximates the ionospheric correction value calculated by the calculation unit 41 according to the index value of the ionospheric state for each area.

For example, since it is conceivable that influence of the ionospheric disturbance is strong in the area where the spatial variation of the ionospheric correction value is large, the selection unit 44 increases the order of the function that approximates the ionospheric correction value, and since it is conceivable that the ionospheric disturbance is not so much affected in the area where the spatial variation of the ionospheric correction value is small, the selection unit 44 reduces the order of the function that approximates the ionospheric correction value.

Note that, the selection unit 44 selects the order of the approximation function in which the total number of grid points corresponding to each piece of the positioning augmentation information a delivered from the quasi-zenith satellite 1 is equal to or less than the specified value. The specified value is the total number of grid points that satisfy the limit of the transmission capacity of the positioning augmentation information a.

The determination unit 45 determines a value of the coefficient of the approximation function when the ionospheric correction value is approximated using the approximation function of the order selected by the selection unit 44.

The transmission unit 43 includes the value of the coefficient determined by the determination unit 45 in the positioning augmentation information a and performs a process of transmitting it to the quasi-zenith satellite 1. For example, the transmission unit 43 transmits the positioning augmentation information a to the quasi-zenith satellite 1 via the uplink station 6. The quasi-zenith satellite 1 delivers the positioning augmentation information a received from the main control station 4 to the ground station terminal 3. Since only the coefficient when the ionospheric correction value is approximated with the approximation function is transmitted as the positioning augmentation information a, the amount of information to be transmitted is reduced.

Further, since the order of the approximation function is selected according to the ionospheric state, the approximation error can be reduced.

Next, the operation of the selection unit 44 will be described.

For example, the selection unit 44 selects a second-order approximation function expressed by the following equation (11) according to the ionospheric state for each area. However, M is the order of the approximation function shown in the following equation (11), and $p_{ij}$ is the coefficient of the approximation function shown in the following equation (11).

$$f(x,y) = \sum_{\substack{i=0,...,M \\ j=0,...,M}} p_{ij} x^i y^j \qquad \cdots \quad (1\,1)$$

When the total number of coefficients of the approximation function of the order M is $C_M$, the order corresponding to the h-th area is M(h), and the total number of coefficients of the approximation function of the order M(h) is $C_{M(h)}$, the total number of coefficients of the approximation function in which the total number of grid points is equal to or less than the specified value can be expressed by the following equation (12).

$$\sum_{h=1}^{H} C_{M(h)} < TH \qquad \cdots \quad (1\,2)$$

The selection unit 44 calculates the order M(h) for each area according to the following equation (13) using the spatial variation $\Omega_h$ of the ionospheric correction value $I_{Gi}$. As for the order M(h), the larger the $\Omega_h$, the higher order is selected, and the smaller the $\Omega_h$, the lower order is selected. Note that in the following equation (13), K is a parameter set by the user. The determination unit 45 calculates the coefficient $p_{ij}$ by using the least-square method for the approximation function of the following equation (13), for example.

$$M(h) = K \frac{\Omega_h}{\sum_{j=1}^{H} \Omega_j} \qquad \cdots \quad (1\,3)$$

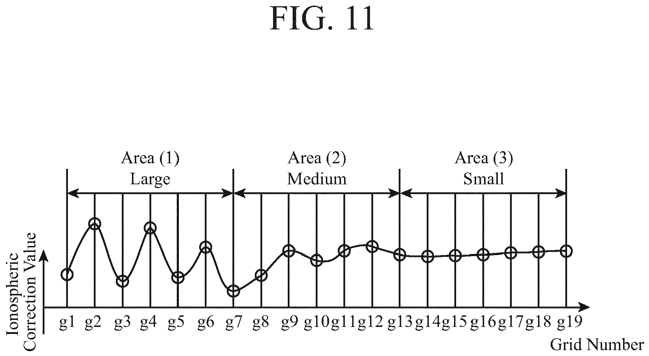

FIG. 11 is a diagram showing an outline of a grid interval setting process according to the fluctuation of the ionospheric correction value in the third embodiment. In FIG. 11, in order to simplify the explanation of the relationship between the area and the grid points, the grid points are not defined in two dimensions of latitude and longitude, but in one dimension for each grid number. In the area (1), the spatial variation of the ionospheric correction value is large, in the area (3), the spatial variation of the ionospheric correction value is small, and in the area (2), the spatial variation of the ionospheric correction value is about medium between the area (1) and the area (3).

The selection unit 44 selects a high order as the order of the approximation function that approximates the ionospheric correction value in the area (1) where the spatial variation of the ionospheric correction value is large. The determination unit 45 determines the value of the coefficient of the approximation function when the ionospheric correction value is approximated using the approximation function of the high order selected by the selection unit 44. The transmission unit 43 includes the value of the coefficient determined by the determination unit 45 in the positioning augmentation information a and transmits it to the quasi-zenith satellite 1. The ground station terminal 3 receives the positioning augmentation information a corresponding to the grid points close to the ground station terminal 3, obtains the ionospheric correction value using the order included in the positioning augmentation information a, and corrects the positioning information b using the obtained ionospheric correction value. As a result, the centimeter-class positioning accuracy can be achieved.

In the area (2) where the spatial variation of the ionospheric correction value is medium, the selection unit 44 selects the order of medium height between the area (1) and the area (3) as the order of the approximation function that approximates the ionospheric correction value. The determination unit 45 determines the value of the coefficient of the approximation function when the ionospheric correction value is approximated using the approximation function of the medium order selected by the selection unit 44. The transmission unit 43 includes the value of the coefficient determined by the determination unit 45 in the positioning augmentation information a and transmits it to the quasi-zenith satellite 1. The ground station terminal 3 receives the positioning augmentation information a corresponding to the grid points close to the ground station terminal 3, obtains the ionospheric correction value using the order included in the positioning augmentation information a, and corrects the positioning information b using the obtained ionospheric correction value. As a result, the centimeter-class positioning accuracy can be achieved.

The selection unit 44 selects a low order as the order of the approximation function that approximates the ionospheric correction value in the area (3) where the spatial variation of the ionospheric correction value is small. The determination unit 45 determines the value of the coefficient of the approximation function when the ionospheric correction value is approximated using the approximation function of the low order selected by the selection unit 44. The transmission unit 43 includes the value of the coefficient determined by the determination unit 45 in the positioning augmentation information a and transmits it to the quasi-zenith satellite 1. The ground station terminal 3 receives the positioning augmentation information a corresponding to the grid points close to the ground station terminal 3, obtains the ionospheric correction value using the order included in the positioning augmentation information a, and corrects the positioning information b using the obtained ionospheric correction value. As a result, the centimeter-class positioning accuracy can be achieved.

Note that, the functions of the calculation unit 41, the transmission unit 43, the selection unit 44, and the determination unit 45 in the information processing device according to the third embodiment are implemented by a processing circuit. The processing circuit may be the processing circuit 102 of the dedicated hardware shown in FIG. 7A or the processor 103 that executes programs stored in the memory 104 shown in FIG. 7B.

As described above, the information processing device according to the third embodiment selects the order of the approximation function that approximates the ionospheric correction value on the basis of the index value (spatial variation of the ionospheric correction value) of the ionospheric state for each of the plurality of areas divided on the ground, determines the value of the coefficient when the ionospheric correction value is approximated using the approximation function of the selected order, includes the determined value of the coefficient in the positioning augmentation information a, and transmits it. As a result, even when ionospheric disturbance occurs, it is possible to reduce the amount of positioning augmentation information while maintaining positioning accuracy. In addition, the same effect as described above can be obtained by executing the positioning augmentation information transmission method in the procedure described above.

Fourth Embodiment.

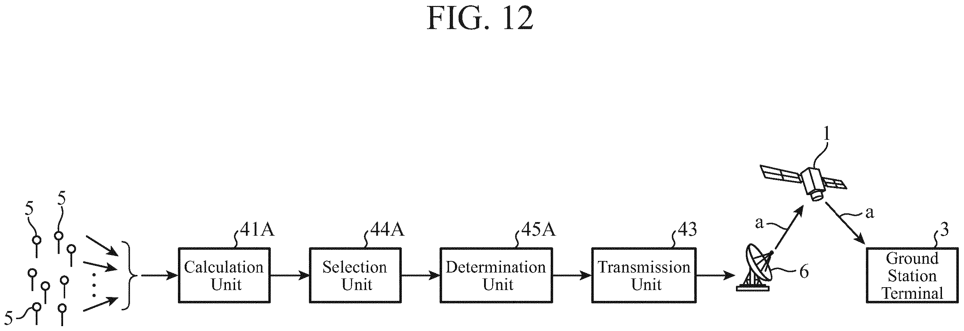

FIG. 12 is a block diagram showing a configuration of an information processing device according to a fourth embodiment, and is a device corresponding to the main control station 4 shown in FIG. 1. The information processing device shown in FIG. 12 includes a calculation unit 41A, a transmission unit 43, a selection unit 44A, and a determination unit 45A, and generates positioning augmentation information a corresponding to each of a plurality of grid points on the basis of the positioning correction information measured by each of the plurality of electronic reference points 5.

The calculation unit 41A calculates the positioning correction information corresponding to each of all the grid points included in each area on the basis of the correction information measured by each of the plurality of electronic reference points 5. For example, the calculation unit 41A, as in the second embodiment, calculates the ionospheric correction value error $\sigma$ (integrity information) corresponding to each of all the grid points included in each area.

The selection unit 44A selects the order of the approximation function that approximates the ionospheric correction value error $\sigma$ calculated by the calculation unit 41 according to the index value of the ionospheric state for each area.

For example, since it is conceivable that influence of the ionospheric disturbance is strong in the area where the spatial average of the ionospheric correction value error $\sigma$ is large, the selection unit 44A increases the order of the function that approximates the ionospheric correction value error $\sigma$, and since it is conceivable that the ionospheric disturbance is not so much affected in the area where the spatial average of the ionospheric correction value error $\sigma$ is small, the selection unit 44A reduces the order of the function that approximates the ionospheric correction value error $\sigma$.

Note that, the selection unit 44A selects the order of the approximation function in which the total number of grid points corresponding to each piece of the positioning augmentation information a delivered from the quasi-zenith satellite 1 is equal to or less than the specified value. The specified value is the total number of grid points that satisfy the limit of the transmission capacity of the positioning augmentation information a.

The determination unit 45A determines the value of the coefficient of the approximation function when the ionospheric correction value error σ is approximated using the approximation function of the order selected by the selection unit 44A.

The transmission unit 43 includes the value of the coefficient determined by the determination unit 45A in the positioning augmentation information a and performs a process of transmitting it to the quasi-zenith satellite 1. For example, the transmission unit 43 transmits the positioning augmentation information a to the quasi-zenith satellite 1 via the uplink station 6. The quasi-zenith satellite 1 delivers the positioning augmentation information a received from the main control station 4 to the ground station terminal 3. Since only the coefficient when the ionospheric correction value error σ is approximated with the approximation function is transmitted as the positioning augmentation information a, the amount of information to be transmitted is reduced. Further, since the order of the approximation function is selected according to the ionospheric state, the approximation error can be reduced.

Next, the operation of the selection unit 44A will be described.

For example, the selection unit 44A selects an order of an approximation function that approximates an ionospheric correction value error σ calculated by the calculation unit 41A for each grid point according to the spatial average of the ionospheric correction value error σ (integrity information). For example, the selection unit 44A selects an order M(h) for each area in accordance with the following equation (14). As for the order M(h), the larger $(\xi_h)^{-1}$, which is the reciprocal of the spatial mean value of the ionospheric correction value error $\sigma_{Gi}$ in the h-th area, the higher order is selected, and the smaller $(\xi_h)^{-1}$, the lower order is selected. In the following equation (14), K is a parameter set by the user. The determination unit 45A calculates the coefficient $p_{ij}$ by using the least-square method for the approximation function of the following equation (14), for example.

$$M(h) = K \frac{\xi_h^{-1}}{\displaystyle\sum_{j=1}^{H} \xi_j^{-1}} \qquad \cdot \cdot \cdot \ (1\ 4)$$

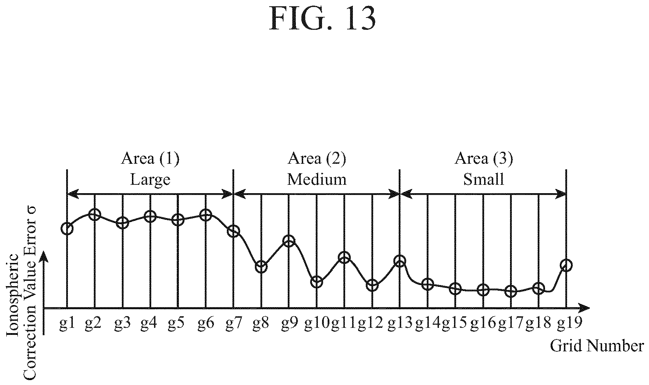

FIG. 13 is a diagram showing an outline of a grid interval setting process according to the fluctuation of the ionospheric correction value error σ in the fourth embodiment. In FIG. 13, in order to simplify the explanation of the relationship between the area and the grid points, the grid points are not defined in two dimensions of latitude and longitude, but in one dimension for each grid number. In the area (1), the spatial mean value of the ionospheric correction value error σ is large, in the area (3), the spatial mean value of the ionospheric correction value error σ is small, and in the area (2), the spatial mean value of the ionospheric correction value error σ is about medium between the area (1) and the area (3).

The selection unit 44A selects a high order as the order of the approximation function that approximates the ionospheric correction value error σ in the area (1) where the spatial mean value of the ionospheric correction value error σ is large. The determination unit 45A determines the value of the coefficient of the approximation function when the ionospheric correction value error σ is approximated using the approximation function of the high order selected by the selection unit 44A. The transmission unit 43 includes the value of the coefficient determined by the determination unit 45A in the positioning augmentation information a and transmits it to the quasi-zenith satellite 1. The ground station terminal 3 receives the positioning augmentation information a corresponding to the grid points close to the ground station terminal 3, obtains the ionospheric correction value error σ using the order included in the positioning augmentation information a, and corrects the positioning information b using the obtained ionospheric correction value error σ. As a result, the centimeter-class positioning accuracy can be achieved.

In the area (2) where the spatial mean value of the ionospheric correction value error σ is medium, the selection unit 44A selects an order of a medium height between the area (1) and the area (3) as the order of the approximation function that approximates the ionospheric correction value error σ. The determination unit 45A determines the value of the coefficient of the approximation function when the ionospheric correction value error σ is approximated using the approximation function of a medium order selected by the selection unit 44A. The transmission unit 43 includes the value of the coefficient determined by the determination unit 45A in the positioning augmentation information a and transmits it to the quasi-zenith satellite 1. The ground station terminal 3 receives the positioning augmentation information a corresponding to the grid points close to the ground station terminal 3, obtains the ionospheric correction value error σ using the order included in the positioning augmentation information a, and corrects the positioning information b using the obtained ionospheric correction value error σ. As a result, the centimeter-class positioning accuracy can be achieved.

The selection unit 44A selects a low order as the order of the approximation function that approximates the ionospheric correction value error σ in the area (3) where the spatial mean value of the ionospheric correction value error σ is small. The determination unit 45A determines the value of the coefficient of the approximation function when the ionospheric correction value error σ is approximated using the approximation function of the low order selected by the selection unit 44A. The transmission unit 43 includes the value of the coefficient determined by the determination unit 45A in the positioning augmentation information a and transmits it to the quasi-zenith satellite 1. The ground station terminal 3 receives the positioning augmentation information a corresponding to the grid points close to the ground station terminal 3, obtains the ionospheric correction value error σ using the order included in the positioning augmentation information a, and corrects the positioning information b using the obtained ionospheric correction value error σ. As a result, the centimeter-class positioning accuracy can be achieved.

Note that, the functions of the calculation unit 41A, the transmission unit 43, the selection unit 44A, and the determination unit 45A in the information processing device according to the fourth embodiment are implemented by a processing circuit. The processing circuit may be the processing circuit 102 of the dedicated hardware shown in FIG. 7A or the processor 103 that executes programs stored in the memory 104 shown in FIG. 7B.

As described above, the information processing device according to the fourth embodiment selects the order of the approximation function that approximates the ionospheric correction value error σ on the basis of the index value (the spatial mean value of the ionospheric correction value error σ) of the ionospheric state for each of a plurality of areas divided on the ground, determines the value of the coefficient when the ionospheric correction value error σ is approximated using the approximation function of the selected order, includes the determined value of the coefficient in the positioning augmentation information a, and transmits it. As a result, even when ionospheric disturbance occurs, it is possible to reduce the amount of positioning augmentation information while maintaining positioning accuracy. In addition, the same effect as described above can be obtained by executing the positioning augmentation information transmission method in the procedure described above.

Fifth Embodiment.

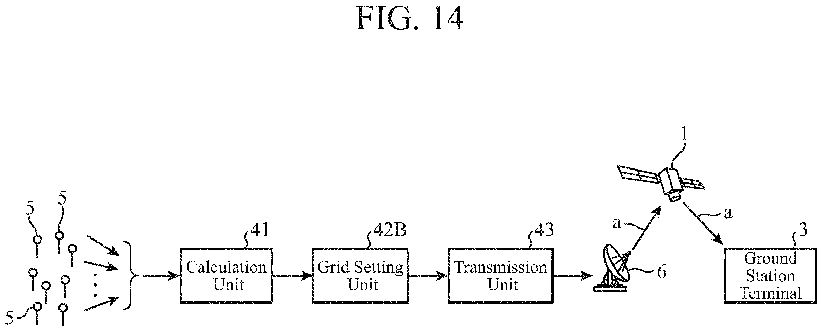

FIG. 14 is a block diagram showing a configuration of an information processing device according to a fifth embodiment, and shows a device corresponding to the main control station 4 shown in FIG. 1. The information processing device shown in FIG. 14 includes a calculation unit 41, a grid setting unit 42B, and a transmission unit 43, and generates positioning augmentation information a corresponding to each of the plurality of grid points on the basis of the positioning correction information measured by each of the plurality of electronic reference points 5.

The calculation unit 41 calculates the positioning correction information corresponding to each of all the grid points included in each area on the basis of the correction information measured by each of the plurality of electronic reference points 5. For example, the calculation unit 41, as in the first embodiment, calculates the ionospheric correction value corresponding to each of all the grid points included in each area.

The grid setting unit 42B calculates a difference between the ionospheric correction value corresponding to the grid point of attention and a mean value of the ionospheric correction values individually corresponding to two grid points that precede and follow the grid point of attention in a transmission order of transmitting the positioning augmentation information a from the quasi-zenith satellite 1. Then, the grid setting unit 42B performs a process of thinning out the grid point of attention corresponding to the smallest difference among the plurality of differences calculated by sequentially changing the grid point of attention in the transmission order of the positioning augmentation information a from the grid points to which the positioning augmentation information a is transmitted. The grid setting unit 42B repeats this thinning-out process until the total number of grid points corresponding to each piece of the positioning augmentation information a delivered from the quasi-zenith satellite 1 is equal to or less than the specified value. The specified value is the total number of grid points that satisfy the limit of the transmission capacity of the positioning augmentation information a.

The transmission unit 43 performs a process of transmitting the positioning augmentation information a including the ionospheric correction values corresponding to each of the grid points at the interval set by the grid setting unit 42B to the quasi-zenith satellite.

For example, the transmission unit 43 transmits the positioning augmentation information a to the quasi-zenith satellite 1 via the uplink station 6. The quasi-zenith satellite 1 delivers the positioning augmentation information a received from the main control station 4 to the ground station terminal 3.

Next, the operation of the grid setting unit 42B will be described.

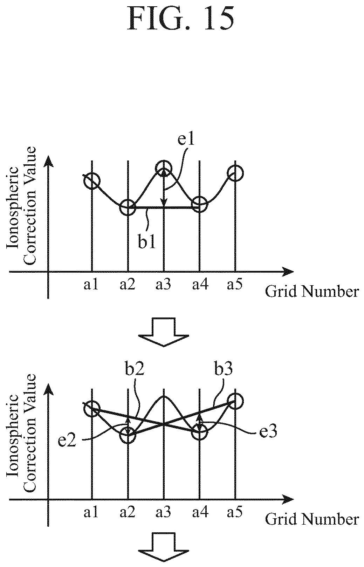

FIG. 15 is a diagram showing an outline of the grid point thinning-out process in the fifth embodiment, and the upper and lower graphs show relationship between the grid number of the grid point in the transmission order of transmitting the positioning augmentation information a from the quasi-zenith satellite 1 and the ionospheric correction value corresponding to each grid point. In the upper graph of FIG. 15, the grid setting unit 42B selects a grid point corresponding to the grid number a3 as a grid point of attention, and specifies a grid point corresponding to the grid number a2 and a grid point corresponding to the grid number a4 which precede and follow this grid point in the transmission order of transmitting the positioning augmentation information a.

Next, the grid setting unit 42B connects the two specified grid points with a line segment b1 and performs linear interpolation. Linear interpolation is a process of calculating a mean value of positioning correction information of grid points connected with a line segment. That is, the grid setting unit 42B calculates the mean value of the ionospheric correction values corresponding to the two grid points connected with the line segment b1. This mean value is called an ionospheric disturbance interpolation value.

Subsequently, the grid setting unit 42B calculates a difference (residual) e1 between the ionospheric correction value corresponding to the grid point of the grid number a3 and the ionospheric disturbance interpolation value. After that, the grid setting unit 42B sequentially changes the grid point of attention in the order of transmitting the ionospheric correction value, and sequentially calculates a plurality of differences in the above procedure. The grid setting unit 42B thins out the grid point of attention corresponding to the smallest difference among the plurality of calculated differences from the grid points to which the positioning augmentation information a is transmitted.

For example, as shown in the lower graph of FIG. 15, it is assumed that a grid point having the smallest difference corresponding to the grid point of the grid number a3 and having the grid number a3 is thinned out. The grid setting unit 42B sets a grid point of the grid number a2, which precedes the thinned grid point in the transmission order, as the grid point of attention, and specifies a grid point corresponding to the grid number a1 and a grid point corresponding to the grid number a4 which precede and follow this grid point in the transmission order of transmitting the positioning augmentation information a. After this, the grid setting unit 42B connects the two specified grid points with a line segment b2 and performs linear interpolation, and calculates the mean value of the ionospheric correction values corresponding to the two grid points connected with the line segment b2. Subsequently, the grid setting unit 42B calculates a difference e2 between the ionospheric correction value corresponding to the grid point of the grid number a2 and the ionospheric disturbance interpolation value.

Similarly, the grid setting unit 42B sets a grid point of the grid number a4, which follows the thinned grid point in the transmission order, as the grid point of attention, and specifies a grid point corresponding to the grid number a2 and a grid point corresponding to the grid number a5 which precede and follow this grid point in the transmission order of transmitting the positioning augmentation information a. After this, the grid setting unit 42B connects the two specified grid points with a line segment b3 and performs linear interpolation, and calculates the mean value of the ionospheric correction values corresponding to the two grid points connected with the line segment b3. Subsequently, the grid setting unit 42B calculates a difference e3 between the ionospheric correction value corresponding to the grid point of the grid number a4 and the ionospheric disturbance interpolation value.

After that, the grid setting unit 42B thins out the grid point of attention corresponding to the smaller difference between the difference e2 and the difference e3 from the grid points to which the positioning augmentation information a is transmitted. In the lower graph of FIG. 15, since the difference e2 is smaller than the difference e3, the grid point of the grid number a2 is thinned out from the grid points, to which the positioning augmentation information a is transmitted, by the grid setting unit 42B. As a result, grid points that do not significantly affect the positioning accuracy even if they are thinned out are selected and thinned out.

Note that, the functions of the calculation unit 41, the grid setting unit 42B, and the transmission unit 43 in the information processing device according to the fifth embodiment are implemented by a processing circuit. The processing circuit may be the processing circuit 102 of the dedicated hardware shown in FIG. 7A or the processor 103 that executes programs stored in the memory 104 shown in FIG. 7B.

As described above, the information processing device according to the fifth embodiment sets an interval between grid points to which the positioning augmentation information a including the ionospheric correction value is delivered from the quasi-zenith satellite 1 by repeating a process of calculating a difference between the ionospheric correction value corresponding to a grid point of attention and a mean value of the ionospheric correction values individually corresponding to two grid points that precede and follow the grid point of attention in a transmission order of transmitting the positioning augmentation information a from the quasi-zenith satellite 1, and thinning out the grid point of attention corresponding to the smallest difference among a plurality of differences calculated by sequentially changing the grid point of attention in the transmission order of the positioning augmentation information a from the grid points to which the positioning augmentation information a is transmitted. Since grid points with small variation in ionospheric correction value are thinned out without dividing the ground into a plurality of areas, it is possible to reduce the amount of positioning augmentation information while maintaining positioning accuracy even if ionospheric disturbance occurs.

In addition, the same effect as described above can be obtained by executing the positioning augmentation information transmission method in the procedure described above.

Sixth Embodiment.

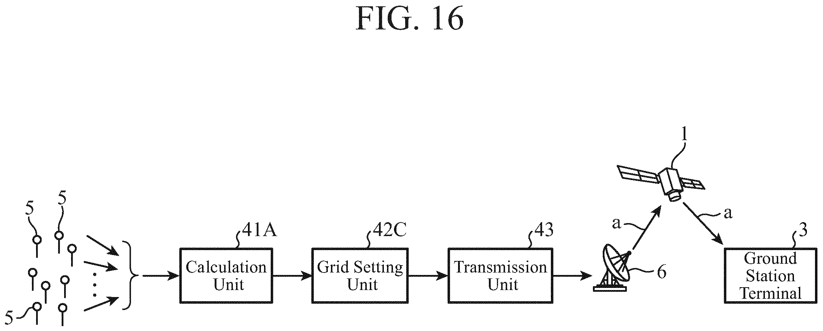

FIG. 16 is a block diagram showing a configuration of an information processing device according to a sixth embodiment, and shows a device corresponding to the main control station 4 shown in FIG. 1. The information processing device shown in FIG. 16 includes a calculation unit 41A, a grid setting unit 42C, and a transmission unit 43, and generates positioning augmentation information a corresponding to each of the plurality of grid points on the basis of the positioning correction information measured by each of the plurality of electronic reference points 5.

The calculation unit 41A calculates the ionospheric correction value error $\sigma$ (integrity information) corresponding to each of all the grid points included in each area on the basis of the correction information measured by each of the plurality of electronic reference points 5.

The grid setting unit 42C calculates a difference between the ionospheric correction value error $\sigma$ corresponding to the grid point of attention and a mean value of the ionospheric correction value errors $\sigma$ individually corresponding to two grid points that precede and follow the grid point of attention in the transmission order of transmitting the positioning augmentation information a from the quasi-zenith satellite 1. Then, the grid setting unit 42B performs a process of thinning out the grid point of attention corresponding to the smallest difference among the plurality of differences calculated by sequentially changing the grid point of attention in the transmission order of the positioning augmentation information a from the grid points to which the positioning augmentation information a is transmitted. The grid setting unit 42C repeats this thinning-out process until the total number of grid points corresponding to each piece of the positioning augmentation information a delivered from the quasi-zenith satellite 1 is equal to or less than the specified value. The specified value is the total number of grid points that satisfy the limit of the transmission capacity of the positioning augmentation information a.

The transmission unit 43 performs a process of transmitting the positioning augmentation information a including the ionospheric correction value error $\sigma$ corresponding to each of grid points at the interval set by the grid setting unit 42C to the quasi-zenith satellite.

For example, the transmission unit 43 transmits the positioning augmentation information a to the quasi-zenith satellite 1 via the uplink station 6. The quasi-zenith satellite 1 delivers the positioning augmentation information a received from the main control station 4 to the ground station terminal 3.

Next, the operation of the grid setting unit 42C will be described.

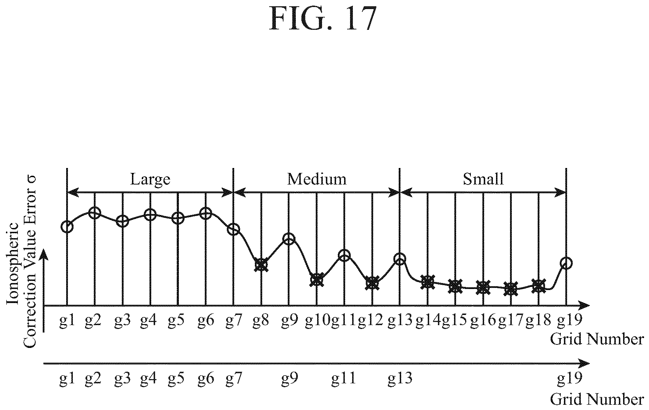

FIG. 17 is a diagram showing an outline of a grid interval setting process according to the fluctuation of the ionospheric correction value error $\sigma$ in the sixth embodiment. The grid setting unit 42C sets the number of thinned-out grid points having a large ionospheric correction value error $\sigma$ to 0 or reduced number, and increases the number of thinned-out grid points having a small ionospheric correction value error $\sigma$. As a result, as shown in FIG. 17, grid points that do not significantly affect the positioning accuracy even if they are thinned out are selected and thinned out.

Note that the functions of the calculation unit 41A, the grid setting unit 42C, and the transmission unit 43 in the information processing device according to the sixth embodiment are implemented by a processing circuit. The processing circuit may be the processing circuit 102 of the dedicated hardware shown in FIG. 7A or the processor 103 that executes programs stored in the memory 104 shown in FIG. 7B.

As described above, the information processing device according to the sixth embodiment sets an interval between grid points to which the positioning augmentation information a including the ionospheric correction value error $\sigma$ is delivered from the quasi-zenith satellite 1 by repeating a process of calculating a difference between the ionospheric correction value error $\sigma$ corresponding to a grid point of attention and a mean value of the ionospheric correction value errors $\sigma$ individually corresponding to two grid points that precede and follow the grid point of attention in a transmission order of transmitting the positioning augmentation information a from the quasi-zenith satellite 1, and thinning out the grid point of attention corresponding to the smallest difference among a plurality of differences calculated by sequentially changing the grid point of attention in the transmission order of the positioning augmentation information a from the grid points to which the positioning augmentation information a is transmitted. Since grid points with a small ionospheric correction value error $\sigma$ are thinned out without dividing the ground into a plurality of areas, it is possible to reduce the amount of positioning augmentation information while maintaining positioning accuracy even if ionospheric disturbance occurs.

In addition, the same effect as described above can be obtained by executing the positioning augmentation information transmission method in the procedure described above.

In the description of the first to sixth embodiments, the case where the index value of the ionospheric state is the ionospheric correction value or the ionospheric correction value error $\sigma$ (integrity information) is shown.

However, in each of the information processing devices shown in the first to sixth embodiments, the index value is not limited to the ionospheric correction value or the ionospheric correction value error $\sigma$, and may be information that can be an index value of the ionospheric state.

Seventh Embodiment.

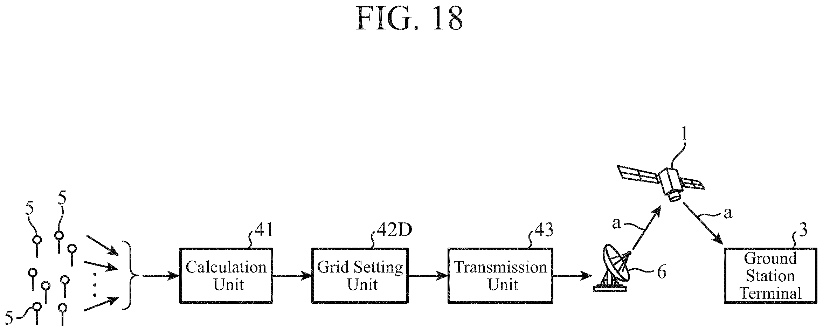

FIG. 18 is a block diagram showing a configuration of an information processing device according to a seventh embodiment, and shows a device corresponding to the main control station 4 shown in FIG. 1. The information processing device shown in FIG. 18 includes a calculation unit 41, a grid setting unit 42D, and a transmission unit 43, and generates positioning augmentation information a corresponding to each of the plurality of grid points on the basis of the positioning correction information measured by each of the plurality of electronic reference points 5.

The calculation unit 41 calculates corresponding positioning correction information for each grid point in all areas on the basis of the positioning correction information measured by each of the plurality of electronic reference points 5. For example, the calculation unit 41 in the seventh embodiment calculates the corresponding ionospheric correction value for each grid point in all areas. Note that, the information processing device according to the seventh embodiment may include a calculation unit 41A instead of the calculation unit 41.

Generally, the closer to the equator, the higher the occurrence degree of ionospheric disturbance. Therefore, in an information processing device according to the fifth embodiment, the grid interval is set narrow if the latitude is close to the equator, and the grid interval is set wide if the latitude is far from the equator. Latitude is based on magnetic latitude or geographic latitude.

Similar to the first embodiment, the grid setting unit 42D sets an interval between grid points to which the positioning augmentation information a including the ionospheric correction value calculated by the calculation unit 41 is transmitted from the quasi-zenith satellite 1 according to the fluctuation of the index value of the ionospheric state for each of a plurality of areas divided on the ground. At this time, the grid setting unit 42D uses the difference in latitude of the area as an index value of the ionospheric state for each area.

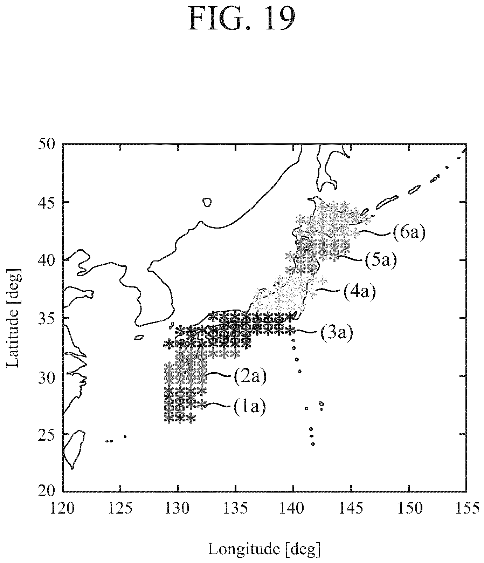

FIG. 19 is a diagram showing areas susceptible to ionospheric disturbances divided for each latitude, and shows the case where the ground is divided into six areas (1a) to (6a) according to the difference in latitude.

For example, the grid setting unit 42D gradually changes the grid interval not only in two areas, an area near the equator and an area far from the equator, but also in areas divided into two or more stages regarding the proximity to the equator, as shown in FIG. 19. Note that, the grid setting unit 42D sets the grid interval so that the total number of grid points corresponding to the positioning augmentation information a that should be delivered from the quasi-zenith satellite 1 is equal to or less than the specified value. The specified value is the total number of grid points that satisfy the limit of the transmission capacity of the positioning augmentation information a.

The transmission unit 43 performs a process of transmitting the positioning augmentation information a including the ionospheric correction value corresponding to each of the grid points at the interval set by the grid setting unit 42D to the quasi-zenith satellite.

For example, the transmission unit 43 transmits the positioning augmentation information a to the quasi-zenith satellite 1 via the uplink station 6. The quasi-zenith satellite 1 delivers the positioning augmentation information a received from the main control station 4 to the ground station terminal 3.

Further, the selection unit shown in the third embodiment or the fourth embodiment selects the order of the approximation function and may set the interval between the grid points to which the positioning augmentation information a is transmitted depending on the difference in the latitude of the area.

As described above, the information processing device according to the seventh embodiment sets the interval between grid points to which the positioning augmentation information a is transmitted from the quasi-zenith satellite 1 according to the difference in latitude on the ground. As a result, even if ionospheric disturbance occurs, the amount of positioning augmentation information can be reduced while maintaining positioning accuracy.

Note that, the present invention is not limited to the above-described embodiments, and within the scope of the present invention, it is possible to modify any component of the embodiments or omit any component of the embodiments.

INDUSTRIAL APPLICABILITY

The information processing device according to the present invention can be used in a positioning system represented by CLAS, for example, because it can reduce the amount of positioning augmentation information while maintaining positioning accuracy even if ionospheric disturbance occurs.

REFERENCE SIGNS LIST

1: quasi-zenith satellite, 2: GNSS satellite, 3: ground station terminal, 4: main control station, 5: electronic reference point, 6: uplink station, 41, 41A: calculation unit, 42, 42A, 42B, 42C, 42D: grid setting unit, 43: transmission unit, 44, 44A: selection unit, 45, 45A: determination unit, 100: input interface, 101: output interface, 102: processing circuit, 103: processor, 104: memory

**Claims**

1. An information processing device used in a positioning system that includes a first satellite for transmitting positioning augmentation information, a second satellite for transmitting positioning information, and a terminal for performing positioning using the positioning information, the first satellite transmitting the positioning augmentation information corresponding to each of grid points set on the ground, and the terminal correcting the positioning information using the positioning augmentation information to perform positioning, the information processing device comprising:

a calculation unit for calculating positioning correction information corresponding to each grid point;
a setting unit for setting an interval between the grid points to which the positioning augmentation information including the positioning correction information calculated by the calculation unit is transmitted from the first satellite, in accordance with a fluctuation of an index value of an ionospheric state for each of a plurality of areas divided on the ground; and
a transmission unit for performing a process of transmitting the positioning augmentation information including the positioning correction information corresponding to each of the grid points having the interval set by the setting unit to the first satellite.

2. The information processing device according to claim 1, wherein the setting unit densely sets an interval between the grid points to which the positioning augmentation information is transmitted from the first satellite in an area where a spatial fluctuation of an ionospheric correction value is large, the ionospheric correction value being used for correcting a transmission delay of the positioning information in an ionospheric layer and calculated by the calculation unit, and the setting unit sparsely sets the interval between the grid points in an area where the spatial fluctuation of the ionospheric correction value is small.

3. The information processing device according to claim 1, wherein the setting unit densely sets an interval between the grid points to which the positioning augmentation information is transmitted from the first satellite in an area where a spatial fluctuation of an error of an ionospheric correction value is large, the ionospheric correction value being used for correcting a transmission delay of the positioning information in an ionospheric layer and calculated by the calculation unit, and the setting unit sparsely sets the interval between the grid points in an area where the spatial fluctuation of the error of the ionospheric correction value is small.

4. The information processing device according to claim 1, wherein the setting unit sets a number of thinned-out grid points to zero or small number to which the positioning augmentation information is transmitted from the first satellite in an area where a spatial fluctuation of an ionospheric correction value is large, the ionospheric correction value being used for correcting a transmission delay of the positioning information in an ionospheric layer and calculated by the calculation unit, and the setting unit increases the number of thinned-out grid points to which the positioning augmentation information is transmitted from the first satellite in an area where the spatial fluctuation of the ionospheric correction value is small.

5. The information processing device according to claim 1, wherein the setting unit sets a number of thinned-out grid points to zero or small number to which the positioning augmentation information is transmitted from the first satellite in an area where a spatial fluctuation of an error of an ionospheric correction value is large, the ionospheric correction value being used for correcting a transmission delay of the positioning information in an ionospheric layer and calculated by the calculation unit, and the setting unit increases the number of thinned-out grid points to which the positioning augmentation information is transmitted from the first satellite in an area where the spatial fluctuation of the error of the ionospheric correction value is small.

6. The information processing device according to any one of claims 1 to 5, wherein the setting unit sets the interval between grid points to which the positioning augmentation information is transmitted from the first satellite depending on a difference in latitude on the ground.

7. An information processing device used in a positioning system that includes a first satellite for transmitting positioning augmentation information, a second satellite for transmitting positioning information, and a terminal for performing positioning using the positioning information, the first satellite transmitting the positioning augmentation information corresponding to each of grid points set on the ground, and the terminal correcting the positioning information using the positioning augmentation information to perform positioning, the information processing device comprising:

a calculation unit for calculating positioning correction information corresponding to each grid point;
a selection unit for selecting an order of an approximation function that approximates the positioning correction information calculated by the calculation unit in accordance with a fluctuation of an index value indicating an ionospheric state for each of a plurality of areas divided on the ground;
a determination unit for determining a value of a coefficient of an approximation function when the positioning correction information is approximated using the approximation function of the order selected by the selection unit; and

a transmission unit for performing a process of including the value of the coefficient determined by the determination unit in the positioning augmentation information and transmitting it to the first satellite.

8. The information processing device according to claim 7, wherein the selection unit selects an order of an approximation function that approximates an ionospheric correction value for each area in accordance with a spatial fluctuation of the ionospheric correction value used for correcting a transmission delay of the positioning information in an ionospheric layer and calculated by the calculation unit.

9. The information processing device according to claim 7, wherein the selection unit selects an order of an approximation function that approximates an error of an ionospheric correction value for each area in accordance with a spatial fluctuation of the error of the ionospheric correction value used for correcting a transmission delay of the positioning information in an ionospheric layer and calculated by the calculation unit.

10. The information processing device according to any one of claims 7 to 9, wherein the selection unit sets an interval between the grid points to which the positioning augmentation information is transmitted from the first satellite depending on a difference in latitude on the ground.

11. An information processing device used in a positioning system that includes a first satellite for transmitting positioning augmentation information, a second satellite for transmitting positioning information, and a terminal for performing positioning using the positioning information, the first satellite transmitting the positioning augmentation information corresponding to each of grid points set on the ground, and the terminal correcting the positioning information using the positioning augmentation information to perform positioning, the information processing device comprising:

a calculation unit for calculating positioning correction information corresponding to each grid point;
a setting unit for setting an interval between the grid points to which the positioning augmentation information including the positioning correction information is transmitted from the first satellite by repeating a process of calculating a difference between the positioning correction information corresponding to a target grid point and a mean value of the positioning correction information individually corresponding to two grid points disposed ahead and behind the target grid point in a transmission order of the positioning augmentation information transmitted from the first satellite and thinning out the target grid point corresponding to a smallest difference among a plurality of differences calculated by sequentially changing the target grid point in the transmission order of the positioning augmentation information from the grid points to which the positioning augmentation information is transmitted; and
a transmission unit for performing a process of transmitting the positioning augmentation information including the positioning correction information corresponding to each of the grid points having the interval set by the setting unit to the first satellite.

12. The information processing device according to claim 11, wherein the positioning correction information is an ionospheric correction value used for correcting a transmission delay of the positioning information in an ionospheric layer and calculated by the calculation unit.

13. The information processing device according to claim 11, wherein the positioning correction information is an error of an ionospheric correction value used for correcting a transmission delay of the positioning information in an ionospheric layer and calculated by the calculation unit.

14. A positioning augmentation information transmission method of a positioning system that includes a first satellite for transmitting positioning augmentation information, a second satellite for transmitting positioning information, and a terminal for performing positioning using the positioning information, the first satellite transmitting the positioning augmentation information corresponding to each of grid points set on the ground, and the terminal correcting the positioning information using the positioning augmentation information to perform positioning, the positioning augmentation information transmission method comprising:

calculating, by a calculation unit, positioning correction information corresponding to each grid point;
setting, by a setting unit, an interval between the grid points to which the positioning augmentation information including the positioning correction information calculated by the calculation unit is transmitted from the first satellite, in accordance with a fluctuation of an index value of an ionospheric state for each of a plurality of areas divided on the ground; and

performing, by a transmission unit, a process of transmitting the positioning augmentation information including the positioning correction information corresponding to each of the grid points having the interval set by the setting unit to the first satellite.

FIG. 1

Ground
Station
Terminal —3

# FIG. 2

# FIG. 3

# FIG. 4

# FIG. 5

A

# FIG. 6

# FIG. 7A

Processing Circuit 102

Input Interface 100

Output Interface 101

# FIG. 7B

Processor 103

Memory 104

Input Interface 100

Output Interface 101

EP 3 919 938 A1

# FIG. 8

FIG. 9

FIG. 10

EP 3 919 938 A1

# FIG. 11

EP 3 919 938 A1

# FIG. 12

FIG. 13

# FIG. 14

EP 3 919 938 A1

# FIG. 15

# FIG. 16

Calculation Unit 41A → Grid Setting Unit 42C → Transmission Unit 43 → 6 → 1 → 3 Ground Station Terminal

5 5 5

# FIG. 17

# FIG. 18

FIG. 19

## INTERNATIONAL SEARCH REPORT

| International application No. |
|---|
| PCT/JP2019/008658 |

**A. CLASSIFICATION OF SUBJECT MATTER**
Int. Cl. G01S19/07(2010.01)i

According to International Patent Classification (IPC) or to both national classification and IPC

**B. FIELDS SEARCHED**

Minimum documentation searched (classification system followed by classification symbols)
Int. Cl. G01S19/00-G01S19/55

Documentation searched other than minimum documentation to the extent that such documents are included in the fields searched
Published examined utility model applications of Japan   1922-1996
Published unexamined utility model applications of Japan   1971-2019
Registered utility model specifications of Japan   1996-2019
Published registered utility model applications of Japan   1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-112555 A (MITSUBISHI ELECTRIC CORP.) 19 July 2018, paragraphs [0012]-[0041], fig. 1-8 & US 2017/0363744 A1, paragraphs [0042]-[0159], fig. 1-8 & WO 2016/088654 A1 | 1-6, 14 |
| Y | JP 2013-186127 A (THALES SA) 19 September 2013, paragraphs [0001]-[0047], fig. 1-6 & US 2013/0234886 A1,paragraphs [0001]-[0069], fig. 1-6 & EP 2637040 A1 & FR 2987899 A1 & CA 2808155 A1 | 1-6, 14 |
| Y | WO 2015/145719 A1 (MITSUBISHI ELECTRIC CORP.) 01 October 2015, paragraphs [0013], [0047], fig. 2, 18 & US 2017/0090038 A1, paragraphs [0062]-[0065], [0205]-[0210], fig. 2, 18 & EP 3124997 A1 | 3, 5 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24.05.2019 | 11.06.2019 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/008658

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-318271 A (JAPAN RADIO CO., LTD.) 31 October 2002, paragraphs [0012], [0021], [0022], table 1* (Family: none) | 1-14 |
| A | JP 2010-112842 A (NATIONAL INSTITUTE OF INFORMATION AND COMMUNICATIONS TECHNOLOGY) 20 May 2010, entire text, all drawings (Family: none) | 1-14 |
| A | JP 2014-109578 A (THALES SA) 12 June 2014, entire text, all drawings & US 2014/0152497 A1 & EP 2738573 A1 & FR 2998976 A1 & CA 2835420 A1 | 1-14 |
| A | US 2014/0292573 A1 (TRIMBLE NAVIGATION LIMITED) 02 October 2014, entire text, all drawings & EP 2746811 A2 | 1-14 |
| A | US 2006/0017610 A1 (CALIFORNIA INSTITUTE OF TECHNOLOGY) 26 January 2006, entire text, all drawings & WO 2006/073490 A2 | 1-14 |
| A | SAKAI, Takeyasu et al., Improving Availability of Ionospheric Corrections in the Low Magnetic Latitude Region, Proceedings of the Institute of Navigation 2005 National Technical Meeting, The Institute of Navigation, Inc., 26 January 2005, pages. 569-579 | 1-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016088654 A